# EUROPEAN PATENT APPLICATION

(11) **EP 4 592 220 A1**
(43) Date of publication of application: **30.07.2025**
(21) Application number: 24209479.5
(22) Date of filing: 29.10.2024
(51) Int. Cl.: B65G 47/26, B65G 47/71, B65G 47/51, B65G 47/29, B65G 21/20, B65G 37/00

(54) **APPARATUS AND METHOD FOR TRANSFERRING AND ACCUMULATING OBJECTS AND PACKAGING LINE COMPRISING SAID APPARATUS**

(30) Priority: 23.01.2024 IT 202400001218
(71) Applicant: Europool S.r.l., 43036 Fidenza (PR) (IT)
(72) Inventor: PRIERO, Marco, 43036 FIDENZA (IT)
(74) Representative: Dondi, Silvia

(57) **Abstract**

Apparatus (1) for transferring and accumulating objects (100) comprising:
- a plurality of accumulation channels (3) having an extension along a direction parallel to an accumulation direction (D1);
- a single row feeding conveyor (4) for feeding objects (100) arranged upstream of the accumulation channels (3) and extending along a feeding direction (D2) which is orthogonal to the accumulation direction (D1);
- at least one loading guide (10) slidingly mounted relative to the feeding conveyor (4) to transfer the objects (100) from the feeding conveyor (4) to the accumulation channels (3);
- at least one flow stop device (12) which is movable relative to the feeding conveyor (4) and arranged upstream of the loading guide (10) to stop the flow of objects (100) in response to a filled condition downstream.

## Description

The present invention relates to an apparatus and a method for transferring and accumulating objects and a packaging line comprising such an apparatus. In particular, the objects may be bottles, dispensers, containers or the like.

The proposed invention finds application in the food and beverage industry, or in general in the logistics field.

In production and packaging lines, for example between two successive workstations, the use of an accumulation table which acts as a buffer for the objects coming from the upstream station is known, in particular when jamming occurs upstream and/or during maintenance interventions. The use of an accumulation table therefore prevents having to stop the upstream station as well.

There are different accumulation table architectures and different accumulation logics on the market, tailored to the specific needs of the line.

For example, from document WO2014/076390 it is known an accumulation table interposed between an input belt and an output belt, on which rows of objects are transferred and on which heads and/or manipulating robots adapted to move the rows on the table operate. Feeding in rows can cause problems with the continuous operation of the system. In addition, the use of manipulating robots affects overall dimensions and increases the complexity of the line control logic. Furthermore, some types of products, particularly delicate ones, require careful handling management.

Another solution of known type, described in document EP3221240, shows an accumulator device for dynamically accumulating products in which two parallel conveyor belts are put in communication by a transfer device (or curved guide) movable along the belts. By moving the transfer device along the belts, it is possible to generate a certain space between two products so that products do not arrive downstream of the transfer device for a given time interval.

Such a device is used for small accumulation tables. As the size of the device increases, the speed and effort required accordingly increase, losing efficiency (i.e., lower hourly line yield).

The regulation of the flow of objects moving forward on the feeding conveyor towards the curvilinear guide is carried out by means of a dosing device mounted in a fixed position on the conveyor structure, upstream of the guide itself.

Such a dosing device is formed by a pair of rotating lateral belts which partially extend over a portion of the feeding conveyor, fixed on opposite sides of the same conveyor relative to the direction in which the objects are moving forward.

However, this solution has an obvious speed limit linked to the downtimes with flow stop, emptying of the production queue and the shifting of the guide. Such a limit becomes critical especially for high speeds and smaller formats (thus less stable), already manifesting problems around 7000-8000 bottles per hour.

In this context, the technical task at the basis of the present invention is to propose an apparatus and a method for transferring and accumulating objects and a packaging line which overcome the problems of the prior art cited above.

In particular, the object of the present invention is to provide an apparatus and a method for transferring and accumulating objects, which is capable of operating reliably even at higher speeds relative to the known solutions, regardless of the format of the objects.

The stated technical task and specified objects are substantially achieved by an apparatus for transferring and accumulating objects, comprising:
- a plurality of accumulation channels parallel to one another, each accumulation channel having an elongated extension along a direction parallel to an accumulation direction between a loading end and an unloading end for loading and unloading the objects;
- a single row feeding conveyor for feeding objects, on which the objects move forward one after the other in a single row, said feeding conveyor being arranged upstream of the accumulation channels at the loading end of the accumulation channels and extending along a feeding direction which is orthogonal to the accumulation direction;
- at least one loading guide slidingly mounted relative to the feeding conveyor, said loading guide having at least one curvilinear portion so as to be able to transfer the objects from the feeding conveyor to the accumulation channels;
- at least one flow stop device arranged upstream of the loading guide and operatively active on the feeding conveyor so as to stop the flow of objects in response to a filled condition downstream.

Originally, the flow stop device is movable relative to the feeding conveyor. In accordance with an embodiment, the flow stop device is slidingly mounted relative to the feeding conveyor.

Preferably, the flow stop device is movable in a direction parallel to the feeding direction D2.

For example, the flow stop device comprises a pair of rotating lateral belts arranged on opposite sides of a portion of the feeding conveyor.

In accordance with an embodiment, the flow stop device is movable transversely to the feeding direction.

For example, the flow stop device comprises a pneumatic piston.

In accordance with a preferred embodiment, the apparatus further comprises a pair of telescopic lateral barriers arranged on opposite sides of the feeding conveyor and configured to extend parallel to the feeding direction.

In particular, the telescopic lateral barriers are connected to the flow stop device and are configured to extend away from the flow stop device. Preferably, the flow stop device is integrally connected to the loading guide.

For example, the flow stop device is part of the loading guide, i.e., it is integrated in the loading guide.

In accordance with an embodiment, the flow stop device is activated independently of the loading guide.

The flow stop device is configurable at least in:
- an inoperative configuration, wherein the flow stop device allows the objects to flow continuously along the feeding conveyor towards the loading guide;
- an operative configuration, wherein said flow stop device intervenes to stop the flow of objects on the feeding conveyor.

The stated technical task and the specified objects are substantially achieved by a packaging line comprising an infeed unit for objects, an outfeed unit for objects and an apparatus such as the one proposed above, which is interposed between the inlet and the outlet of the packaging line.

The stated technical task and the specified objects are substantially achieved by a method for transferring and accumulating objects employing the proposed apparatus, said method comprising following steps:
- arranging the loading guide with an outlet at the loading end of a first accumulation channel of the apparatus and configuring the flow stop device in the inoperative configuration;
- feeding the objects along the feeding conveyor and diverting them by means of the loading guide towards the first accumulation channel;
- in response to the filling of the first accumulation channel, bringing the flow stop device into the operative configuration whereby the flow of objects along the feeding conveyor is blocked;
- shifting the loading guide parallel to the feeding direction so that it is positioned with its outlet at the loading end of an accumulation channel adjacent to the first accumulation channel and bringing the flow stop device back into the inoperative configuration.

In accordance with an embodiment, during the shifting of the loading guide along the feeding conveyor, the telescopic lateral barriers extend parallel to the feeding direction and away from the flow stop device.

Further features and advantages of the present invention will become more apparent from the following approximate, and hence non-limiting, description of a preferred, but not exclusive, embodiment of an apparatus for transferring and accumulating objects and a packaging line, as illustrated in the appended drawings, in which:

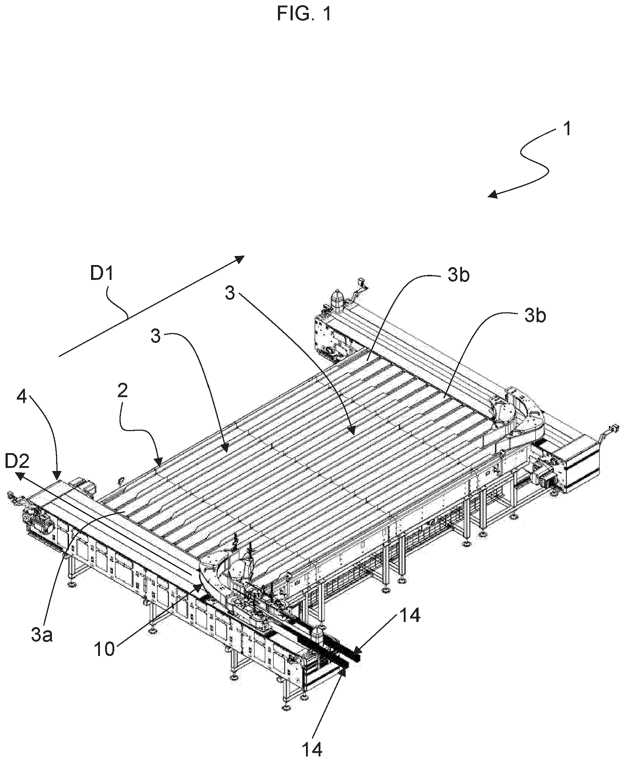

- figure 1 shows an apparatus for transferring and accumulating objects, according to the present invention, in perspective view;
- figure 2 shows a part of the apparatus of figure 1, with an enlargement on the loading guide;
- figure 3 shows the loading guide of figure 2 in a different position, whereby the telescopic lateral barriers are in a completely extracted configuration;
- figures 4 to 9 show perspective views of the apparatus of figure 1 in different steps of a method for transferring and accumulating objects, according to the present invention.

With reference to the figures, number 1 denotes an apparatus for transferring and accumulating objects 100.

In this context, the objects 100 can be containers, such as bottles, dispensers, jars, cans.

Alternatively, the objects 100 can also be packages of products, e.g., powdered coffee or tea.

The apparatus 1 comprises a plurality of accumulation channels 3 parallel to one another.

Each accumulation channel 3 has a linear extension between a loading end 3a and an unloading end 3b of the objects 100.

In particular, the accumulation channels 3 have an extension along directions parallel to an accumulation direction D1.

Therefore, the accumulation channels 3 are flanked according to a direction which is orthogonal to the accumulation direction D1.

In the embodiment described and illustrated herein, the plurality of accumulation channels 3 forms an accumulation table 2.

Alternatively, the accumulation channels 3 may be part of two or more flanked accumulation tables.

Upstream of the accumulation channels 3, a single row feeding conveyor 4 is arranged, on which the objects 100 move forward one after the other in a single row.

In particular, the feeding conveyor 4 is arranged at the loading ends 3a of the accumulation channels 3.

The feeding conveyor 4 extends linearly along a feeding direction D2 which is orthogonal to the accumulation direction D1.

The apparatus 1 comprises at least one loading guide 10 slidingly mounted on the feeding conveyor 4.

In this context, precisely because it slides on the feeding conveyor 4, the loading guide 10 is also called a carriage.

The loading guide 10 has at least one curvilinear portion so as to be able to enable a transfer of objects 100 from the feeding conveyor 4 to one of the accumulation channels 3, as will be better described below.

The loading guide 10 comprises an inlet 10a, an outlet 10b and a curvilinear passage 10c which extends between the inlet 10a and the outlet 10b.

The loading guide 10 is mounted on the feeding conveyor 4 so that the inlet 10a of the loading guide 10 is in communication with the feeding channel 4 to receive the objects 100.

In particular, the loading guide 10 has a curvature such as to allow a transfer of the objects 100 substantially at 90°, i.e., passing from the feeding direction D2 to a direction parallel to the accumulation direction D1.

In particular, the loading guide 10 is configured to enable the transfer of the objects 100 towards the accumulation channel 3 at which the outlet 10b of the loading guide 10 is positioned.

The apparatus 1 further comprises a flow stop device 12 arranged upstream of the loading guide 10 and operatively active on the feeding conveyor 4 so as to stop the flow of objects 100 in response to the occurrence of a filled condition downstream.

In particular, the flow stop device 12 is arranged upstream of the inlet 10a of the loading guide 10.

In this context, the expression "upstream" is always to be referred to the direction in which the objects 100 move forward within the apparatus 1. The flow stop device 12 allows to regulate the flow of the objects 100 moving forward in the feeding direction D2 towards the loading guide 10, enabling or interrupting such flow, as will be better described below. Advantageously, the flow stop device 12 is mounted movably relative to the feeding conveyor 4.

The flow stop device 12 can assume at least two configurations, namely:
- an inoperative configuration, wherein it allows the objects 100 to flow continuously along the feeding conveyor 4 towards the loading guide 10;
- an operative configuration, wherein it intervenes to stop the flow of objects 100 on the feeding conveyor 4.

The configuration assumed by the flow stop device 12 is coordinated with the action of the loading guide 10.

In particular, when the loading guide 10 is with its outlet 10b at one of the accumulation channels 3 to be filled or being filled, the flow stop device 12 is in the inoperative configuration, whereby the objects 100 flow continuously along the feeding conveyor 4, through the loading guide 10 (in particular through its passage 10c) and are diverted into the corresponding accumulation channel 3.

On the contrary, upon the occurrence of the filling condition of the accumulation channel 3, the flow stop device 12 switches to the operative configuration, whereby it interrupts the flow of the objects 100 along the feeding conveyor 4, thus allowing the emptying of the loading guide 10, in preparation for its shifting.

During the shifting of the loading guide 10 along the feeding conveyor 4, the flow stop device 12 remains in the operative configuration.

When the loading guide 10 has been repositioned with its outlet 10b at a new accumulation channel 3 to be filled, the flow stop device 12 returns to the inoperative configuration, thus allowing the flow of objects 100 to resume to start filling the new accumulation channel 3.

In a preferred embodiment, shown in the figures, the flow stop device 12 is movable in a direction parallel to the feeding direction D2.

In particular, the flow stop device 12 comprises a pair of lateral elements 13 which extend on opposite sides of a portion of the feeding conveyor 4. In this context, the opposite sides refer to the feeding direction D2 of the objects 100.

For example, the lateral elements 13 are rotating belts.

In particular, in the inoperative configuration the rotating belts 13 are in continuous movement so as to move the objects 100 forward along the feeding conveyor 4 towards the loading guide 10. On the contrary, when the rotating belts 13 are in the operative configuration, they are blocked whereby the flow of objects 100 on the feeding conveyor 4 is interrupted.

Alternatively, the lateral elements 13 are pads.

In accordance with an embodiment variant (not shown), the flow stop device 12 is movable transversely to the feeding direction D2, in particular orthogonally to the feeding direction D2.

For example, the flow stop device 12 comprises a pneumatic piston which can be actuated orthogonally to the feeding direction D2.

In accordance with an embodiment of the invention, the flow stop device 12 is integrally connected to the loading guide 10.

For example, the flow stop device 12 is part of the loading guide 10. That is, the flow stop device 12 is integrated on board the loading guide 10.

In accordance with the embodiment described and illustrated herein, the apparatus 1 further comprises a pair of telescopic lateral barriers 14 configured to extend parallel to the feeding direction D2.

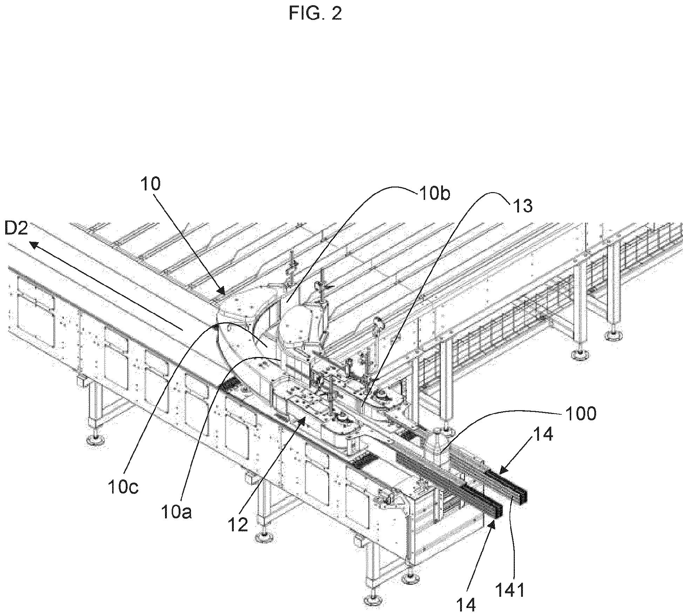

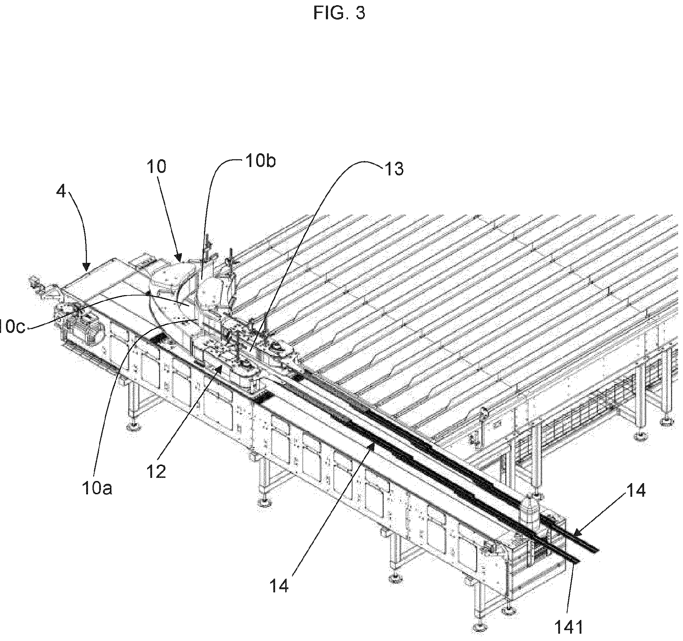

The telescopic lateral barriers 14 are configured to extend away from the loading guide 10 and the flow stop device 12, as seen from figures 2 and 3.

Preferably, the telescopic lateral barriers 14 are connected to the flow stop device 12.

In the embodiment described and illustrated herein, each telescopic lateral barrier 14 is mounted at one end of one of the lateral elements 13 of the flow stop device 12.

Each telescopic lateral barrier 14 comprises a plurality of elements 141 which can be slid relative to one another, so as to pass from a completely retracted configuration to a completely extracted configuration of the telescopic lateral barrier 14.

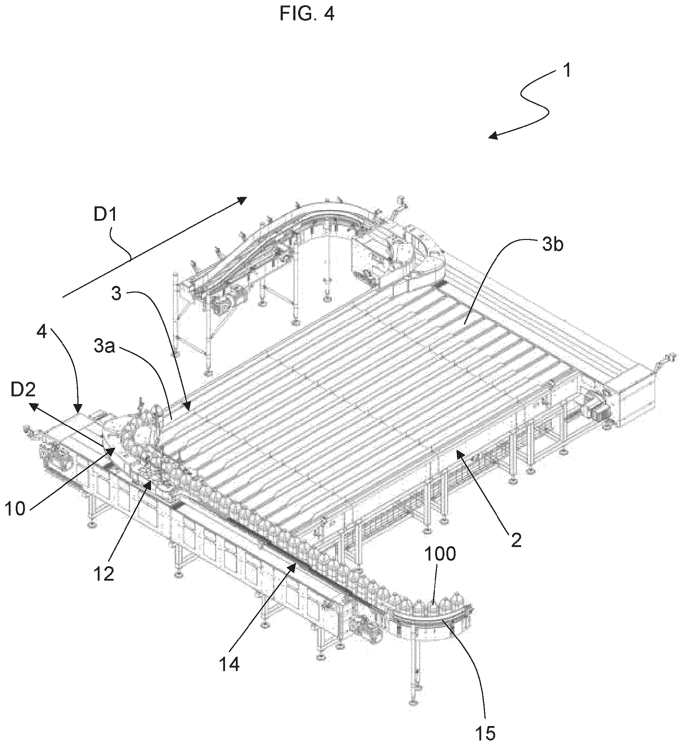

In a preferred embodiment, shown in figures 3 and 4, the elements 141 are plate-shaped pieces slidably mounted with respect to one another.

In the fully retracted configuration, the plate-shaped pieces 141 of the telescopic lateral barrier 14 are substantially arranged flanked.

In the completely extracted configuration, the plate-shaped pieces 141 of the telescopic lateral barrier 14 extend away from the flow stop device 12 so as to delimit the feeding conveyor 4 up to a pair of fixed guides 15.

For example, the fixed guides 15 are curvilinear, as seen in figure 4.

In an embodiment variant (not shown), the elements 141 which make up the telescopic lateral barriers 14 are coaxial tubular elements slidably mounted one inside the other.

In an alternative embodiment, the telescopic lateral barriers 14 are connected to the fixed guides 15 instead of to the flow stop device 12.

In this case, in the completely extracted configuration, the elements 141 of the two telescopic lateral barriers 14 extend starting from the pair of fixed guides 15 and away from them so as to delimit the feeding conveyor 4 substantially up to the flow stop device 12.

During the movement of the loading guide 10 (i.e., during the channel change) the telescopic lateral barriers 14 are extracted so as to keep the objects 100 guided along the feeding conveyor 4, thus protecting the objects 100 themselves from thrusts and pressures due to the flow of moving objects 100.

In an alternative embodiment (not shown), the flow stop device 12 is activated independently of the loading guide 10.

The method for transferring and accumulating objects, according to the present invention, is described below with reference to figures 4 to 9, which show different operating steps.

The method is implemented by means of the proposed apparatus. Consider figure 4 initially, where the objects 100 (in this case water dispensers) are fed along the feeding conveyor 4 and the loading guide 10 is located with its outlet 10b at the loading end 3a of a first accumulation channel 3, which is located to the left in the accumulation table 2.

The loading guide 10 enables the diverting of the objects 100 in transit towards the first accumulation channel 3.

In this step, the flow stop device 12 is in the inoperative configuration, whereby the objects 100 move forward in a continuous flow along the feeding conveyor 4 towards the first accumulation channel 3, passing through the passage 10c of the loading guide 10.

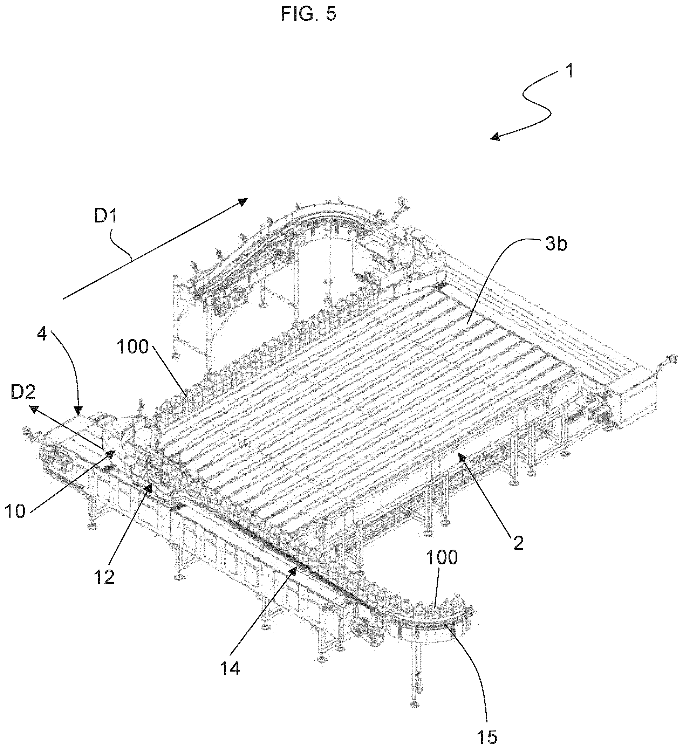

When the loading of the first accumulation channel 3 is completed, the flow stop device 12 switches from the inoperative configuration to the operative configuration, whereby it intervenes to stop the flow of objects 100 on the feeding conveyor 4. The apparatus 1 is in the step of figure 5. The filling of the first accumulation channel 3 constitutes a filling condition downstream of the flow stop device 12, which determines the passage thereof from the inoperative configuration to the operative configuration.

In the step of figure 5, the flow of objects 100 is interrupted, whereby the loading guide 10 is freed (the objects 100 which occupied it have already passed into the first accumulation channel 3).

At this point, the loading guide 10 can shift to the next accumulation channel (indicated herein as the second accumulation channel 3), which in this case is immediately to the right of the first accumulation channel 3. The loading guide 10 shifts parallel to the feeding direction D2, in the direction going from left to right.

The flow stop device 12 is configured to keep the objects 100 stopped during the shifting of the loading guide 10 from one accumulation channel 3 to the other.

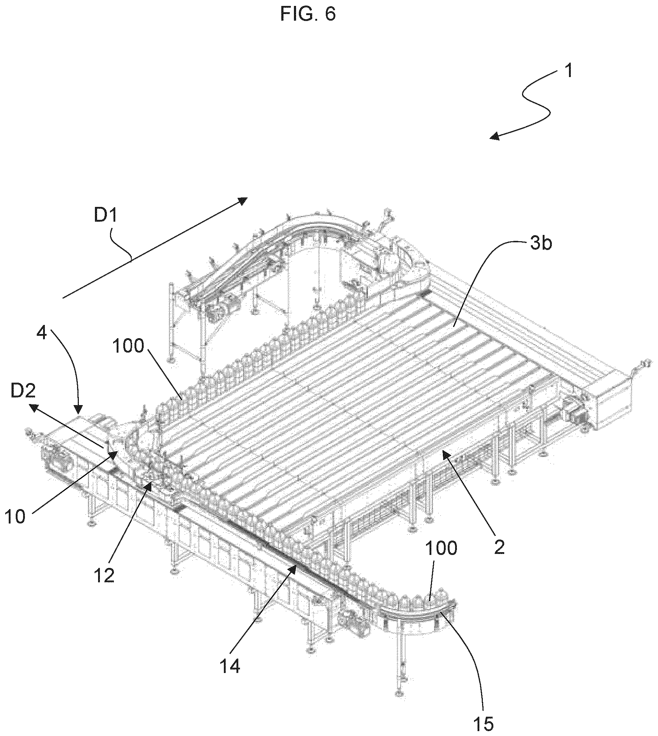

When the loading guide 10 has been positioned with its outlet 10b at the loading end 3a of the second accumulation channel 3, the flow stop device 12 returns again to the inoperative configuration whereby the flow of objects 100 restarts continuously, as seen in figure 6.

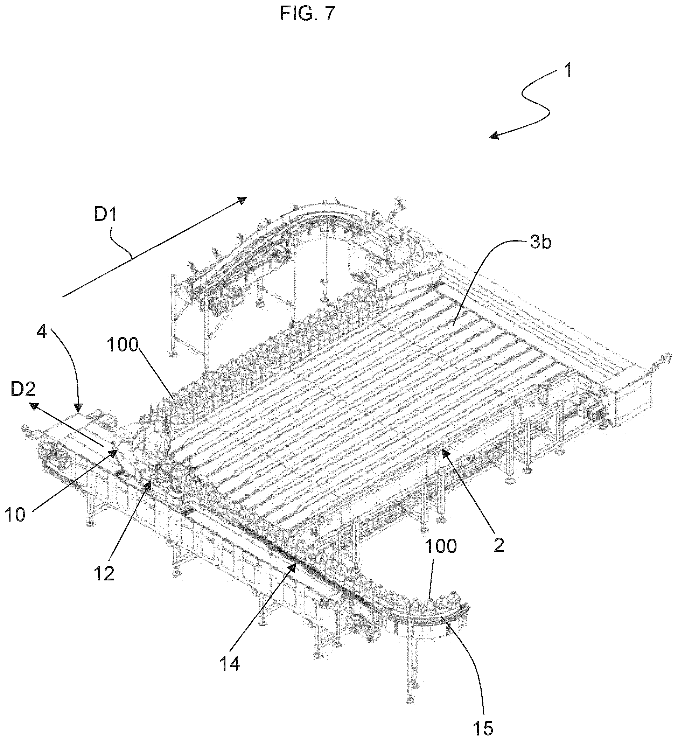

The flow of objects 100 continues until the second accumulation channel 3 is filled. Once the filling condition of the second accumulation channel 3 has been reached, illustrated in figure 7, the flow stop device 12 returns to the operative configuration to allow the emptying of the loading guide 10, the blocking of the flow and the shifting of the loading guide 10 to the immediately adjacent accumulation channel 3 (always parallel to the feeding direction D2, to the right). The cycle is repeated in this manner until the last accumulation channel 3 is filled, i.e., the one most to the right in the accumulation table 2.

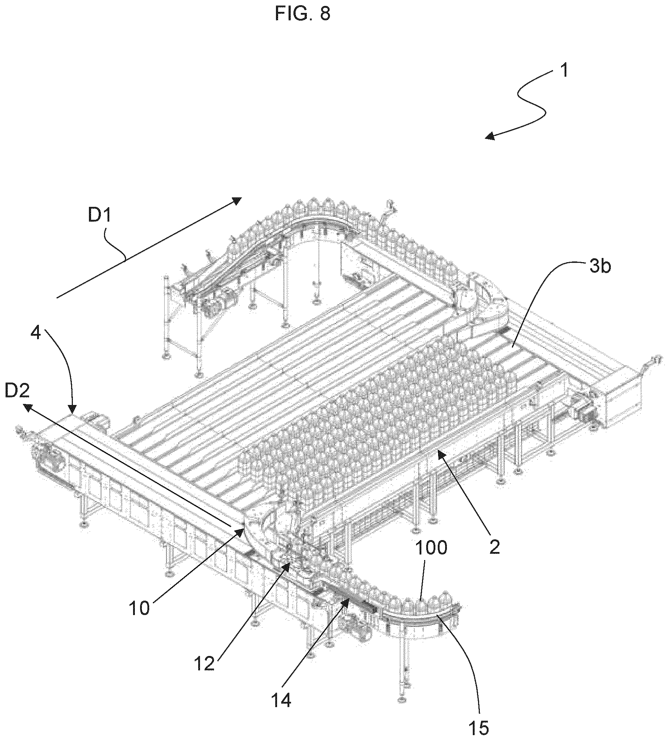

This step is shown in figure 8.

Upon reaching the filling of the last accumulation channel 3, the flow stop device 12 switches to the operative configuration to allow the emptying of the loading guide 10, the blocking of the flow and the shifting of the loading guide 10 along the feeding direction D2, but in the opposite direction relative to the previous one, i.e., from right to left.

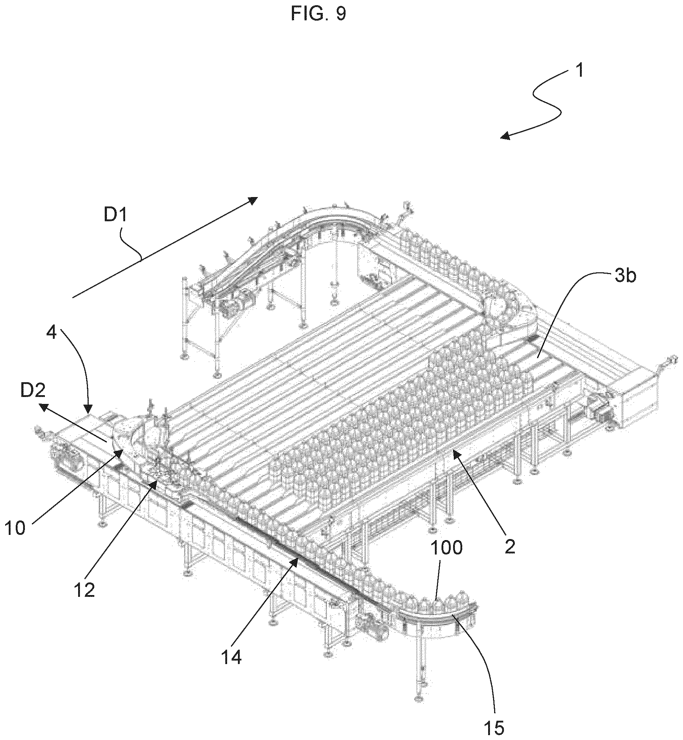

The loading guide 10 thus returns with its outlet 10b at the first accumulation channel 3, as seen in figure 9.

The unloading of the accumulation channels 3 occurs in sequence from the first channel (left) to the last (right). The images of the unloading are not provided herein, as the focus of the invention is on the loading.

The features of the apparatus and method for transferring and accumulating objects and the packaging line according to the present invention emerge clearly from the above description, as do the advantages.

In particular, the time required to change the channel is reduced thanks to the fact that the flow stop device is movable, preferably sliding, relative to the feeding conveyor.

Thereby, the proposed apparatus guarantees excellent operation even at high speeds and for large formats (e.g., 5-10 litres), for example up to 20,000 dispensers per hour.

In the embodiment where the flow stop device is integral with the loading guide and/or integrated therein, the apparatus is also even more streamlined and efficient.

## Claims

1. An apparatus (1) for transferring and accumulating objects (100), said apparatus (1) comprising:
- a plurality of accumulation channels (3) parallel to one another, each accumulation channel (3) having an elongated extension along a direction parallel to an accumulation direction (D1) between a loading end (3a) and an unloading end (3b) for loading and unloading the objects (100);
- a single row feeding conveyor (4) for feeding objects (100), on which the objects (100) move forward one after the other in single row, said feeding conveyor (4) being arranged upstream of the accumulation channels (3) at the loading end (3a) of said accumulation channels (3) and extending along a feeding direction (D2) which is orthogonal to the accumulation direction (D1);
- at least one loading guide (10) slidingly mounted relative to said feeding conveyor (4), said loading guide (10) having at least one curvilinear portion so as to be able to transfer the objects (100) from the feeding conveyor (4) to the accumulation channels (3);
- at least one flow stop device (12) arranged upstream of the loading guide (10) and operatively active on the feeding conveyor (4) so as to stop the flow of objects (100) in response to a filled condition downstream,
**characterised in that** said flow stop device (12) is movable relative to said feeding conveyor (4).

2. The apparatus (1) according to claim 1, wherein said flow stop device (12) is slidingly mounted relative to said feeding conveyor (4).

3. The apparatus (1) according to claim 2, wherein said flow stop device (12) is movable in a direction parallel to the feeding direction (D2).

4. The apparatus (1) according to claim 3, wherein said flow stop device (12) comprises a pair of rotating lateral belts (13) arranged on opposite sides of a portion of the feeding conveyor (4).

5. The apparatus (1) according to claim 2, wherein said flow stop device (12) is movable transversely to the feeding direction (D2).

6. The apparatus (1) according to claim 5, wherein said flow stop device (12) comprises a pneumatic piston.

7. The apparatus (1) according to claim 3 or 4, further comprising a pair of telescopic lateral barriers (14) arranged on opposite sides of the feeding conveyor (4) and configured to extended parallel to the feeding direction (D2).

8. The apparatus (1) according to claim 7, wherein said telescopic lateral barriers (14) are connected to the flow stop device (12) and are configured to extend away from said flow stop device (12).

9. The apparatus (1) according to any one of the preceding claims, wherein said flow stop device (12) is integrally connected to the loading guide (10).

10. The apparatus (1) according to any one of the preceding claims, wherein said flow stop device (12) is part of the loading guide (10).

11. The apparatus (1) according to any one of claims 1 to 8, wherein said flow stop device (12) is activated independently of the loading guide (10).

12. The apparatus (1) according to any one of the preceding claims, wherein said flow stop device (12) is configurable at least in:
- an inoperative configuration, wherein said flow stop device (12) allows the objects (100) to flow continuously along the feeding conveyor (4) towards the loading guide (10);
- an operative configuration, wherein said flow stop device (12) intervenes to stop the flow of objects (100) on the feeding conveyor (4).

13. A packaging line comprising an infeed unit for objects (100), an outfeed unit for objects (100) and an apparatus (1) according to any one of the preceding claims, said apparatus (1) being interposed between the infeed and outfeed units of the packaging line.

14. A method for transferring and accumulating objects (100) employing the apparatus (100) according to claim 12, said method comprising the following steps:
- arranging the loading guide (10) with its outlet (10b) at the loading end (3a) of a first accumulation channel (3) of the apparatus (1) and configuring the flow stop device (12) in the inoperative configuration;
- feeding the objects (100) along the feeding conveyor (4) and diverting them by means of the loading guide (10) towards said first accumulation channel (3);
- in response to the filling of the first accumulation channel (3), bringing the flow stop device (12) into the operative configuration whereby the flow of objects (100) along the feeding conveyor (4) is blocked;
- shifting the loading guide (10) parallel to the feeding direction (D2) so that it is positioned with its outlet (10b) at the loading end (31) of an accumulation channel (3) adjacent to the first accumulation channel (3) of the apparatus (1) and bringing the flow stop device (12) back into the inoperative configuration.

15. The method according to claim 14, further comprising a step of extending telescopic lateral barriers (14) of the apparatus (1) parallel to the feeding direction (D2) and away from the flow stop device (12), said step of extending the telescopic lateral barriers (14) taking place during the shifting of the loading guide (10) in such a way as to maintain the objects (100) guided along the feeding conveyor (4).
